# EUROPÄISCHE PATENTANMELDUNG

(11) **EP 1 469 198 A1**
(43) Veröffentlichungstag der Anmeldung: **20.10.2004**
(21) Anmeldenummer: 04009097.9
(22) Anmeldetag: 16.04.2004
(51) Int. Cl.: F03D 1/06, F03D 11/00, B64C 21/10

(54) **Auftriebsverbessernde Oberflächenstruktur für Windenergiekonverter**

(30) Priorität: 17.04.2003 DE 10318162; 25.04.2003 DE 10319003
(71) Anmelder: Radtke, Eugen, 56645 Nickenich (DE)
(72) Erfinder: Radtke, Eugen, 56645 Nickenich (DE)
(74) Vertreter: Wolff, Felix, Dr.

(57) **Zusammenfassung**

Die vorliegende Erfindung betrifft die Verwendung von Einbuchtungen der Oberfläche eines Rotors eines Windenergiekonverters, wobei der Rotor als Auftriebsund/oder Widerstandsläufer ausgebildet ist, zum Verringern von Strömungsablösungen sowie zur Erzeugung von Auftrieb bzw. Sog.

## Beschreibung

Die vorliegende Erfindung betrifft die Verwendung von Einbuchtungen der Oberfläche eines Rotors eines Windenergiekonverters, wobei der Rotor als Auftriebsund/oder Widerstandsläufer ausgebildet ist.

Erneuerbare Energien haben eine immer größere Bedeutung bei der heutigen Energieversorgung. Besonders wichtig sind Windenergiekonverter, die Windenergie in elektrische Energie umwandeln. Herkömmliche Windenergiekonverter haben den Nachteil, dass sich hinter ihren sich drehenden Rotoren große Wirbelschleppen bilden, die ihren Wirkungsgrad verringern, insbesondere weil der jeweils nachfolgende Flügel in stark verwirbelte Luft eintaucht. Die Wirbelschleppen führen an den Rotorblättern zu Vibrationen, die Bauteile des Windenergiekonverters, beispielsweise das Getriebe, den Mast und die Rotorblattaufhängung, belasten und verstärkt zu Materialermüdung führen.

Aufgabe der vorliegenden Erfindung ist, einen Windenergiekonverter zur Verfügung zu stellen, der die Nachteile des Standes der Technik nicht aufweist und bei dem daher die Bildung von Wirbelschleppen sowie die Materialermüdung verringert und der Wirkungsgrad sowie die Langlebigkeit der Bauteile des Windenergiekonverters verbessert sind.

Die Aufgabe wird gelöst durch mit einem Windernergiekonverter gemäß Patentanspruch 1 gelöst. Vorteilhafte Ausführungsformen sind in den Unteransprüchen beansprucht.

Ein Auftriebs- und/oder Widerstandsläufer im Sinne der Erfindung ist jeder beliebige Rotor für Windkraftkonverter, mit dem Wind in eine Rotationsbewegung umgewandelt wird. Beispielhaft seien hierbei für Rotoren, die als Widerstandsläufer ausgebildet sind, der Savonius-Rotor, Darrius-Rotor, H-Darrius-Rotor sowie das Schalenkreuzanemometer genannt.

Eine Einbuchtung im Sinne der Erfindung ist in die jeweilige Fläche eingeprägt.

Durch die Verwendung von Folien mit Einbuchtungen auf der Oberfläche werden Turbulenzen erzeugt, bevorzugt Mikroturbulenzen, die Energie in die den Rotor umgebende Grenzschicht eintragen. Bestehende Anlagen können mit de Folie nachgerüstet werden. Die Herstellung der erfindungsgemäßen Windenegiekonvertern ist sehr einfach, weil die Rotoren konventionell hergestellt und dann mit der Folie versehen beispielsweise beklebt werden können.

Es war für den Fachmann überaus erstaunlich und nicht zu erwarten, dass es mittels der durch die Einbuchtungen hervorgerufenen Turbulenzen gelingt, Energie in die den Rotor umgebende Grenzschicht einzutragen, durch die Strömungsablösungen an den Auftriebs- und/oder Widerstandsläufern erheblich reduziert sind. Daher wird die Energie bevorzugt gezielt in die Bereiche großer Strömungsablösungen eingebracht. Durch die geringeren Strömungsablösungen folgt die Strömung der Oberfläche des Rotors länger, als bei herkömmlichen Rotoren, die Wirbelschleppenbildung sowie das Auftreten von Vibrationen ist verringert und Bauteile des Windenergiekonverters, insbesondere die Rotorblattaufhängung, das Getriebe und der Mast, werden weniger belastet. Materialermüdungen sind daher geringer und die Bauteile länger betriebsfähig.

Es war für den Fachmann ebenfalls erstaunlich und nicht zu erwarten, dass es mit der erfindungsgemäßen Verwendung von Einbuchtungen der Oberfläche eines Rotors eines Windenergiekonverters weiterhin gelingt, den Strömungswiderstand erheblich zu reduzieren und den Wirkungsgrad des Windenergiekonverters zu verbessern.

Einbuchtungen haben im Vergleich zu Erhöhungen den Vorteil, dass die Strömung im wesentlichen ohne Widerstand über Einbuchtungen hinwegströmen kann, während die Strömung auf eine Erhöhung auftrifft und die Erhöhung daher bzgl. der Strömung einen Widerstand darstellt, durch den die für das Einbringen in die den Rotor umgebende Grenzschicht zur Verfügung stehende Energie kleiner ist.

Weitere Gegenstände der Erfindung sind die Verwendungen gemäß den Patentansprüchen 13 und 14. Vorteilhafte Ausführungsformen sind in den Unteransprüchen beansprucht.

Durch die erfindungsgemäße Verwendung von Einbuchtungen der Oberfläche des Rotors folgt die Strömung der Oberfläche des Rotors länger, als bei herkömmlichen Rotoren. Es war für den Fachmann überaus erstaunlich und nicht zu erwarten, dass die Einbuchtungen die Auftriebs- bzw. Sogbedingungen vorteilhaft beeinflussen. Der durch die Einbuchtungen hervorgerufene größere Auftrieb bzw. Sog ermöglicht insbesondere bei starkem Wind einen größeren Pitch- Anstellwinkel der Rotorblätter im Vergleich mit herkömmlichen Windenergiekonvertern, so dass der Betrieb des Windenergiekonverters, bei dem Einbuchtungen zur Erzeugung von Auftrieb bzw. Sog verwendet werden, bei größeren Windstärken möglich ist. Da stärkerem Wind mehr Energie entzogen werden kann, als schwächerem Wind, verbessert sich die Leistungskurve der Rotorblätter, was sich positiv auf den Umsatz der Betreiber auswirkt.

Vorteilhafterweise kann der Windenergiekonverter, bei dem Einbuchtungen zur Erzeugung von Auftrieb bzw. Sog verwendet werden, wirtschaftlicher betrieben werden.

Die Einbuchtungen haben insbesondere bei sehr großen Windgeschwindigkeiten eine zusätzliche Bremswirkung, so dass sie vorteilhafterweise auch als Sturmbremse wirken.

Die folgenden Ausführungen gelten für alle Gegenstände der vorliegenden Erfindung.

Vorzugsweise weisen die Einbuchtungen einen kreisförmigen, ovalen und/oder vieleckigen Querschnitt auf oder die Einbuchtungen sind federartig ausgebildet. Durch die Veränderung der Form, Anzahl, Tiefe und Größe der Einbuchtungen können die erzeugten Turbulenzen verändert werden und somit kann die in die den Rotor umgebende Grenzschicht eingetragene Energie gezielt in ihrem Betrag und ihrer Verteilung verändert werden. Die Ausdehnung der Grenzschicht ist daher gezielt veränderbar und zwar in Abhängigkeit von der Bauform und der Größe des Windenergiekonverters und insbesondere in Abhängigkeit von dem Profil des Rotors. Der Fachmann versteht, dass jede beliebige Form, Anzahl, Tiefe und Größe von Einbuchtungen möglich ist, die eine entsprechend den strömungsmechanischen Zusammenhängen optimale Strömung ermöglichen und bei der der Strömungswiderstand in Abhängigkeit vom Profil des Rotors im wesentlichen minimiert ist.

Bevorzugt weisen die Einbuchtungen in der Tiefe einen gleichmäßigen und/oder ungleichmäßigen Radius auf, dessen Mittelpunkt besonders bevorzugt außerhalb der Oberfläche liegt. Der Fachmann versteht, dass die Ausformung einer Einbuchtung durch ein Werkzeug erzeugt werden kann, das einen gleichmäßigen oder ungleichmäßigen Radius aufweist und dessen Mittelpunkt vorzugsweise außerhalb der Oberfläche liegt.

Die Einbuchtungen können eine beliebige Tiefe haben. Bevorzugt weisen die Einbuchtungen eine maximale Tiefe von etwa 0,01 - 300mm auf, besonders bevorzugt weisen die Einbuchtungen eine maximale Tiefe von etwa 0,2 - 0,3mm auf.

Vorzugsweise sind die Einbuchtungen an ihren Rändern abgerundet und/oder abgeflacht, so dass Turbulenzen in alle Richtungen nahezu widerstandsfei abströmen können. Dies ist von großer Bedeutung, da bei der Rotation des Rotors Reibungs- und Zentrifugalkräfte auftreten, so dass die Strömung nahe der Oberfläche von innen - d. h. nahe dem Rotationsmittelpunkt - nach außen verläuft und die Abströmrichtung daher nicht immer gleich der Anströmrichtung ist.

Aufgrund der Form und Größe der Einbuchtungen beeinträchtigen geringe Verschmutzungen die Strömung nicht wesentlich. Durch Regen, Wind, die Zentrifugalkräfte und nichtzuletzt aufgrund der abgerundeten und/oder abgeflachten Form kann Schmutzwasser gut abfließen und es stellt sich ein Selbstreinigungseffekt ein.

In einer bevorzugten Ausführungsform weist die Oberfläche unterschiedlich geformte Einbuchtungen auf. Dadurch sind die erzeugten Turbulenzen und ist die in die den Rotor umgebende Oberfläche eingetragene Energie gezielt an das Profil des Rotors anpassbar. Je größer die Strömungsablösung ist, um so mehr Energie wird benötigt, damit die Grenzschicht klein ist. In Bereichen geringer Strömungsablösung werden daher bevorzugt kleine und/oder wenige Einbuchtungen vorgesehen, in Bereichen großer Strömungsablösung werden daher große und/oder viele Einbuchtungen vorgesehen, damit die Strömung möglichst nah am Rotor verläuft.

Die Strömungsablösung beginnt in Abhängigkeit vom Profil des Rotorblattes in Strömungsrichtung gesehen etwa im ersten Drittel bis ersten Hälfte des Rotorblattes, nimmt in Strömungsrichtung gesehen zum hinteren Bereich des Rotorblattes hin zu und ist auf der Ober- und Unterseite des Rotorblattes im Betrag und Verlauf verschieden. Bevorzugt sind daher bei einem Windenergiekonverter, der Rotorblätter aufweist, die Einbuchtungen in Strömungsrichtung gesehen zumindest in deren hinteren Bereich angeordnet.

Besonders bevorzugt sind die Einbuchtungen beliebig verteilt, vorzugsweise mit Versatz und/oder in einem nicht homogenen Muster, so dass die durch die Einbuchtungen verursachten Turbulenzen die durch das Profil des Rotors verursachte Strömung im wesentlichen optimiert so beeinflussen, dass die Strömungsablösung, die Wirbelschleppenbildung und die Auftretenden Vibrationen am Rotor verringert und andererseits der Auftrieb bzw. Sog sowie der Wirkungsgrad des Rotors verbessert ist. Dadurch ist die den Rotor umgebende Grenzschicht im wesentlichen minimiert.

Bevorzugt ist die Anzahl der Einbuchtungen bezogen auf einen Quadratmeter Fläche (1m²) etwa 3x10⁴ - 24 x10⁴ und maximal etwa 5x10⁶.

Vorzugsweise sind mindestens 5, besonders bevorzugt 10, ganz besonders bevorzugt 15, noch mehr bevorzugt 20 und am meisten bevorzugt mindestens 25% der Oberfläche mit Einbuchtungen versehen.

In einer bevorzugten Ausführungsform weist der Windenergiekonverter neben dem Rotor weitere Bauteile auf, die zumindest teilweise mit Einbuchtungen versehen sind. Dies ist insbesondere für die Bauteile des Windenergiekonverters sinnvoll, die die Strömung des Rotors beeinflussen, beispielsweise für den Mast.

Bevorzugt sind die Einbuchtungen auf einer Folie und/oder Ummantelung angeordnet, die besonders bevorzugt reversibel auf den Rotor gebracht ist und die Oberfläche des Rotors bildet. Vorzugsweise ist die Folie und/oder Ummantelung geklebt, so dass sie austauschbar ist. Beispielsweise ist zur Herstellung der Folie und/oder Ummantelung Acryl, Silikon oder Kunststoff verwendbar.

Der Fachmann versteht, dass das Einbringen von Einbuchtungen in die Oberfläche des Rotors auch während der Herstellung der Oberfläche, beispielsweise durch spanende Verfahren, möglich ist. Dies hat den Vorteil der Materialeinsparung und Gewichtsreduzierung, wodurch die auftretenden Fliehkräfte reduziert sind und daher die Bauteile des Windenergiekonverters weniger belastet und langlebiger sind.

Der Fachmann versteht, dass beliebige Verfahren zum Ein- und/oder Aufbringen von Einbuchtungen verwendbar sind, mittels derer die Form, Größe, Anzahl und Tiefe der Einbuchtungen gezielt in und/oder auf die Oberfläche gebracht werden kann.

Beispielsweise können die Einbuchtungen in den Auftriebs- und/oder Widerstandsläufer eingeprägt werden. Des weiteren können die Einbuchtungen durch einen Anstrich, Laserablation, Eloxierung oder durch andere chemische und/oder physikalische Verfahren in oder auf die Oberfläche des Auftriebs- und/oder Widerstandsläufers gebracht werden.

In einer bevorzugten Ausführungsform weist der Windenergiekonverter Widerstandsläufer nach dem Schalenanemometerprinzip auf, wobei nur eine Hälfte einer Schale des Schalenanemometers Einbuchtungen aufweist. Dadurch folgt die Strömung der Oberfläche, die die Einbuchtungen aufweist, länger und die Wirbelschleppe wird reduziert. Vorteilhafteweise können dadurch höhere Drehzahlen erreicht werden. Der Fachmann versteht, dass auch beide Seiten der Halbkugel mit Vertiefungen versehen sein können und die Struktur durch Einbuchtungen verschiedener Form, Tiefe, Größe und Anzahl gezielt optimierbar ist. Bevorzugt weisen alle Schalen desselben Schalenanemometers dieselbe Struktur auf, damit das Schalenanemometer möglichst gleichmäßig rotiert.

Ein weiterer Gegenstand der vorliegenden Erfindung ist ein Windenergiekonverter mit einem Rotor, der als Auftriebs- und/oder Widerstandsläufer ausgebildet ist, wobei mindestens 25% der Oberfläche eines Rotors Einbuchtungen aufweist, mit denen Turbulenzen erzeugbar sind, die Energie in die den Rotor umgebende Grenzschicht eintragen.

Vorzugsweise weisen die Einbuchtungen einen kreisförmigen, ovalen und/oder vieleckigen Querschnitt auf oder sind federartig ausgebildet.

Bevorzugt weisen die Einbuchtungen in der Tiefe einen gleichmäßigen und/oder ungleichmäßigen Radius auf, dessen Mittelpunkt vorzugsweise außerhalb der Oberfläche liegt.

Vorzugsweise weist die Oberfläche unterschiedlich geformte Einbuchtungen auf.

In bevorzugten Ausführungsformen unterscheiden sich die Einbuchtungen in ihrer Form, Tiefe, Größe, Anzahl und Anordnung, so dass in Abhängigkeit vom Profil des Rotors die Strömungsablösung, Wirbelschleppenbildung und die auftretenden Vibrationen im wesentlichen minimiert und der Wirkungsgrad des Rotors im wesentlichen optimiert ist. Weiterhin erzeugen die Einbuchtungen Auftrieb bzw. Sog, so dass der Pitch- Anstellwinkel der Rotorblätter verbessert ist und der Windenergiekonverter wirtschaftlicher betreibbar ist.

Bei Windenergiekonverter mit Auftriebsläufern ist die erfindungsgemäße Technik ebenfalls anwendbar. Bestehende Anlagen können durch Folienummantelungen, Lackierungen oder Glasuren, die die gewünschte Oberflächenstruktur aufweisen, nachträglich umgerüstet werden.

Im folgenden wird die Erfindung anhand von Figuren beschrieben. Diese Erläuterungen sind lediglich beispielhaft und schränken den allgemeinen Erfindungsgedanken nicht ein.
- **Figur 1**: zeigt die Oberfläche eines mit Einbuchtungen versehenen Rotors oder einer Folie in zwei Ansichten.
- **Figur 2**: zeigt weitere Ausgestaltungsformen der Oberfläche in zwei Ansichten.
- **Figur 3**: zeigt ein Strömungsprofil eines luftumströmten Körpers.
- **Figur 4**: zeigt das Profil eines luftumströmten Rotorblattes.
- **Figur 5**: zeigt ebenfalls das Profil eines luftumströmten Rotorblattes.
- **Figur 6-8**: zeigen jeweils ein Schalenanemometer, dessen Oberfläche Einbuchtungen aufweist.

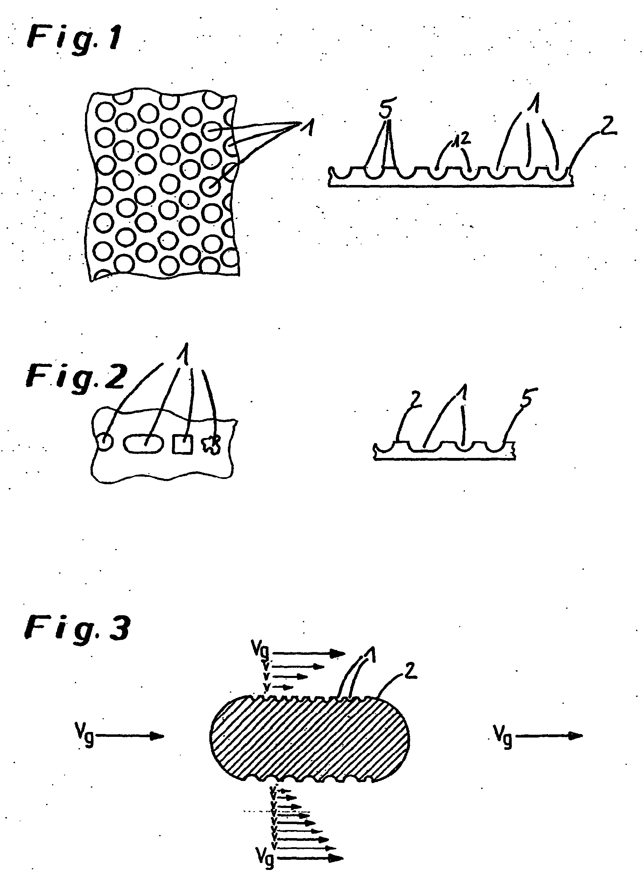

**Figur 1** zeigt eine Oberfläche (2) eines mit Einbuchtungen (1) versehenen Rotors oder einer Folie, die auf einem Rotor befestigt wird, in einer Draufsicht und in einer Seitenansicht. In der dargestellten Ausführungsform sind die Einbuchtungen (1) kreisförmig, versetzt und abgerundet (5), ähnlich der Oberfläche eines Golfballs. Die Mittelpunkte (12) der Radien der Einbuchtungen (1) in die Tiefe gesehen liegen oberhalb der Oberfläche (2) des Rotors. Die Einbringen der Einbuchtungen und die Befestigung der Folie auf dem Rotor kann gleichzeitig erfolgen, indem die Folie beispielsweise mit einer mit Noppen versehenen Rolle auf dem Rotor festgewalzt wird.

**Figur 2** zeigt eine weitere Ausführungsform der Oberfläche (2) mit den Einbuchtungen (1). In dargestellten Einbuchtungen (1) weisen eine unterschiedliche Form und Größe auf. Auch in dieser Ausführungsform sind die Ränder der Einbuchtungen abgerundet (5).

**Figur 3** zeigt ein Strömungsprofil eines beispielsweise mit Luft umströmten aerodynamischen Körpers, der Einbuchtungen (1) aufweist. Nahe der Oberfläche (2) des dargestellten Körpers, beispielsweise eines Auftriebs- und/oder Widerstandsläufers, ist die Strömungsgeschwindigkeit der Luft nahezu Null. Von dort aus steigt die Strömungsgeschwindigkeit bis zum oberen Ende der Grenzschicht an. Durch die Einbuchtungen (1) werden gezielt Turbulenzen (hier nicht dargestellt) hervorgerufen, durch die Energie in die die Oberfläche (2) des Körpers umgebende Grenzschicht eingebracht wird, so dass die Ausdehnung der Grenzschicht gezielt veränderbar ist. Durch verschiedene Form, Größe, Anzahl und Anordnung kann die Grenzschicht um den Körper herum verschieden verändert werden, so dass sich die Strömungsgeschwindigkeitsprofile unterscheiden und Druckdifferenzen in der Grenzschicht entstehen, die den Auftrieb bzw. Sog des Körpers beeinflussen. In **Figur 3** ist insbesondere das Luftströmungsgeschwindigkeitsprofil bei unterschiedlicher Ausdehnung der Grenzschicht eines aerodynamischen und beidseitiger mit unterschiedlichen Einbuchtungen (1) versehenen Körpers dargestellt. Vg ist die gleichförmige Geschwindigkeit; V die Geschwindigkeit der Luftströmung an der Oberfläche, deren Betrag durch die Länge der Pfeile symbolisiert ist.

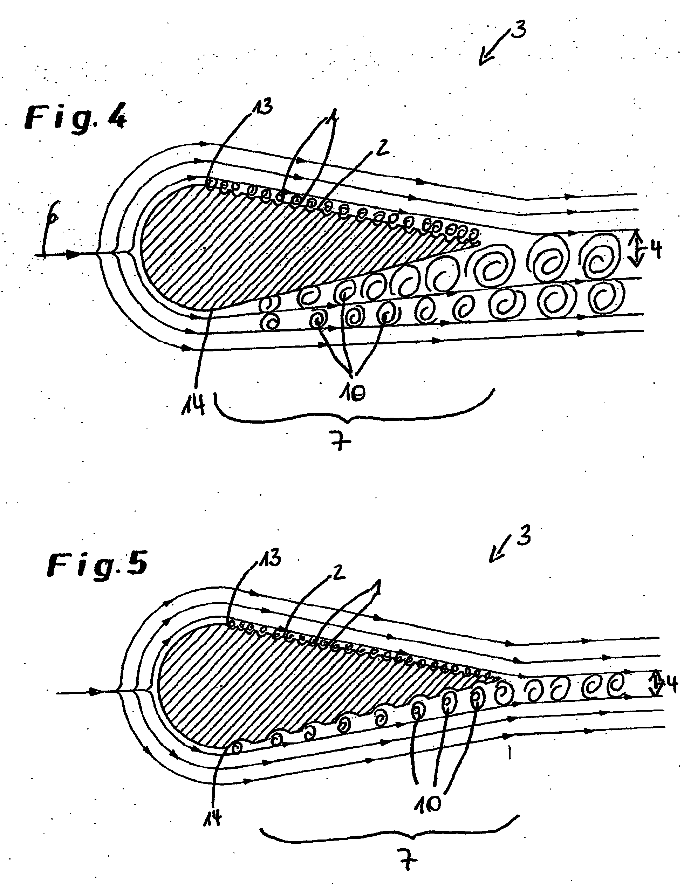

**Figur 4** zeigt das Profil eines luftumströmten Rotorblattes (3), welches eine Oberseite (13) und eine Unterseite (14) aufweist und dessen Oberfläche (2) der Oberseite (13) im hinteren Bereich (7) des Rotorblattes (3) in Strömungsrichtung (6) gesehen Einbuchtungen (1) aufweist. Durch die Einbuchtungen (1) wird Energie in die die Oberfläche (2) der Oberseite (13) des Rotorblattes (3) umgebende Grenzschicht eingetragen und die Luft folgt der Oberfläche (2) des Rotorblattes (3) auf der Oberseite (13) daher länger als ohne die Verwendung der Einbuchtungen (1). Die entstehenden Turbulenzen (10) sind durch Kringel angedeutet. Die Strömungsablösung ist durch einen Doppelpfeil (4) angedeutet.

**Figur 5** zeigt das Profil eines luftumströmten Rotorblattes (3), dessen Oberfläche (2) der Oberseite (13) und der Unterseite (14) im hinteren Bereich (7) des Rotorblattes (3) in Strömungsrichtung (6) gesehen Einbuchtungen (1) aufweist. Die Einbuchtungen (1) der Oberseite (13) und der Unterseite (14) unterscheiden sich in Form, Größe, Anordnung und Anzahl voneinander. Auch hier sind die erzeugten Turbulenzen (10) durch Kringel und die Strömungsablösung ist durch einen Doppelpfeil (4) angedeutet. Durch Vergleich der **Figuren 4 und 5** ist erkennbar, dass die Strömungsablösung (4) durch beiderseitige und gezielt verschiedene Anordnung der Einbuchtungen (1) verringerbar ist.

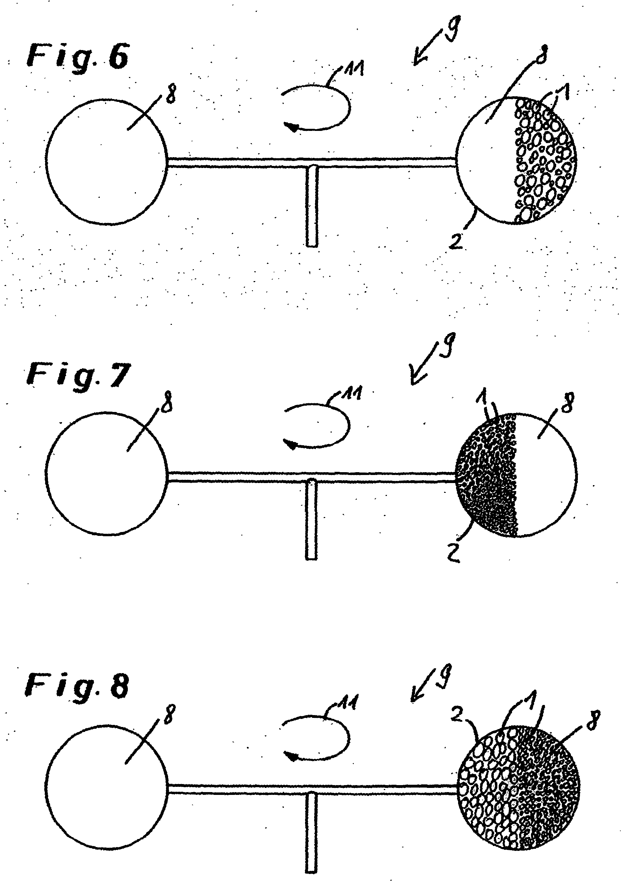

**Figuren 6 bis 8** zeigen jeweils ein Schalenanemometer (9), dessen Oberfläche (2) der Schalen (8) auf der luftumströmten Seite Einbuchtungen (1) aufweist. Die Drehrichtung des Schalenanemomoters (9) ist mit einem Pfeil (11) angedeutet. Die Schalen (8) sind Widerstandsläufer. Die Einbuchtungen (1) verursachen unterschiedliche Strömungen auf beiden Halbseiten der Schalen (8), was einen Sog und damit eine höhere Effizienz des Schalenanemometers (9) bewirkt. Bei gleicher Anströmgeschwindigkeit sind mit Schalenanemometern (9) gemäß der Figur 6-8 höhere Drehgeschwindigkeiten möglich, als bei Schalenanemometern (9), die keine Einbuchtungen (1) der Oberfläche (2) aufweisen.

### Bezugszeichenliste

- 1: Einbuchtungen
- 2: Oberfläche eines Rotors
- 3: Rotorblatt
- 4: Strömungsablösung
- 5: Abgerundeter Rand einer Einbuchtung
- 6: Strömungsrichtung
- 7: Hinterer Bereich eines Rotorblattes
- 8: Schale eines Schalenanemometers
- 9: Schalenanemometer
- 10: Turbulenzen
- 11: Drehrichtung eines Schalenanemometers
- 12: Mittelpunkt des Radius einer Einbuchtung in der Tiefe
- 13: Oberseite eines Rotorblattes
- 14: Unterseite eines Rotorblattes
- Vg: gleichförmige Geschwindigkeit einer Luftströmung
- V: Geschwindigkeit einer Luftströmung, deren Betrag durch die Länge eines Pfeiles angedeutet ist.

## Patentansprüche

1. Windenergiekonverter mit Auftriebs- und/oder Widerstandsläufern, **dadurch gekennzeichnet, dass** vorzugsweise mindestens 5%, der Oberfläche eines Rotors, der als Auftriebs- und/oder Widerstandsläufer ausgebildet ist, mit einer Folie bedeckt ist, die Einbuchtungen aufweist.

2. Windenergiekonverter nach Anspruch 1, **dadurch gekennzeichnet, dass** mit den Einbuchtungen Turbulenzen erzeugbar sind, die Energie in die den Rotor umgebende Grenzschicht eintragen.

3. Windenergiekonverter nach Anspruch 1 oder 2, **dadurch gekennzeichnet, dass** die Einbuchtungen einen kreisförmigen, ovalen und/oder vieleckigen Querschnitt aufweisen.

4. Windenergiekonverter nach einem der voranstehenden Ansprüche, **dadurch gekennzeichnet, dass** die Einbuchtungen in der Tiefe einen gleichmäßigen und/oder ungleichmäßigen Radius aufweisen, dessen Mittelpunkt außerhalb der Oberfläche liegt.

5. Windenergiekonverter nach einem der voranstehenden Ansprüche, **dadurch gekennzeichnet, dass** die Vertiefungen unterschiedlich tief sind.

6. Windenergiekonverter nach einem der voranstehenden Ansprüche, **dadurch gekennzeichnet, dass** die Vertiefungen mit Versatz angeordnet sind.

7. Windenergiekonverter nach einem der voranstehenden Ansprüche, **dadurch gekennzeichnet, dass** eine Oberfläche unterschiedlich geformte Vertiefungen aufweist.

8. Windenergiekonverter nach einem der voranstehenden Ansprüche, **dadurch gekennzeichnet, dass** die Vertiefungen auf der Oberfläche nicht homogen verteilt sind.

9. Windenergiekonverter nach einem der voranstehenden Ansprüche, **dadurch gekennzeichnet, dass** er neben dem Rotor weitere Bauteile aufweist, die zumindest teilweise mit Einbuchtungen versehen sind.

10. Windenergiekonverter nach einem der voranstehenden Ansprüche, **dadurch gekennzeichnet, dass** die Folie reversibel an den Auftriebs- und/oder Widerstandsläufern anbringbar ist.

11. Windenergiekonverter nach einem der voranstehenden Ansprüche, **dadurch gekennzeichnet, dass** er Rotorblätter aufweist und dass die Einbuchtungen bezogen auf die Umströmungsrichtung in deren hinteren Bereich angeordnet sind.

12. Windenergiekonverter nach einem der Ansprüche 1 - 10, **dadurch gekennzeichnet, dass** er Widerstandsläufer nach dem Schalenanemometerprinzip aufweist und dass nur eine Hälfte der Schale Einbuchtungen aufweist.

13. Verwendung von Einbuchtungen (1) auf der Oberfläche (2) eines Rotors eines Windenergiekonverters, der als Auftriebs- und/oder Widerstandsläufer ausgebildet ist, zum Verringern von Strömungsablösungen (4).

14. Verwendung von Einbuchtungen (1) auf der Oberfläche (2) eines Rotors eines Windenergiekonverters, der als Auftriebs- und/oder Widerstandsläufer ausgebildet ist, zur Erzeugung von Auftrieb bzw. Sog.

15. Verwendung nach einem der vorhergehenden Ansprüche, **dadurch gekennzeichnet, dass** die Einbuchtungen (1) einen kreisförmigen, ovalen und/oder vieleckigen Querschnitt aufweisen oder dass die Einbuchtungen (1) federartig ausgebildet sind.

16. Verwendung nach einem der vorhergehenden Ansprüche, **dadurch gekennzeichnet, dass** die Anzahl der Einbuchtungen (1) bezogen auf einen Quadratmeter Fläche (1m²) etwa 3x10⁴ - 24 x10⁴ und maximal etwa 5x10⁶ ist.

17. Verwendung nach einem der vorhergehenden Ansprüche, **dadurch gekennzeichnet, dass** die Einbuchtungen (1) in der Tiefe einen gleichmäßigen und/oder ungleichmäßigen Radius aufweisen, dessen Mittelpunkt vorzugsweise außerhalb der Oberfläche (2) liegt.

18. Verwendung nach einem der vorhergehenden Ansprüche, **dadurch gekennzeichnet, dass** die Einbuchtungen (1) eine maximale Tiefe von etwa 0,01 - 300mm aufweisen, bevorzugt etwa 0,2 - 0,3mm.

19. Verwendung nach einem der vorhergehenden Ansprüche, **dadurch gekennzeichnet, dass** die Einbuchtungen (1) an ihren Rändern abgerundet (5) und/oder abgeflacht sind.

20. Verwendung nach einem der vorhergehenden Ansprüche, **dadurch gekennzeichnet, dass** die Oberfläche (2) unterschiedlich geformte Einbuchtungen (1) aufweist.

21. Verwendung nach einem der vorhergehenden Ansprüche, **dadurch gekennzeichnet, dass** die Einbuchtungen (1) auf der Oberfläche (2) beliebig verteilt sind, bevorzugt mit Versatz und/oder in einem nicht homogenen Muster.

22. Verwendung nach einem der vorhergehenden Ansprüche, **dadurch gekennzeichnet, dass** der Windenergiekonverter neben dem Rotor weitere Bauteile aufweist, die zumindest teilweise mit Einbuchtungen (1) versehen sind.

23. Verwendung nach einem der vorhergehenden Ansprüche, **dadurch gekennzeichnet, dass** die Einbuchtungen (1) auf einer Folie und/oder Ummantelung angeordnet sind, die vorzugsweise reversibel auf den Rotor gebracht ist.

24. Verwendung nach einem der vorhergehenden Ansprüche, **dadurch gekennzeichnet, dass** der Windenergiekonverter Rotorblätter (3) aufweist und dass die Einbuchtungen (1) in Strömungsrichtung (6) gesehen zumindest teilweise in deren hinteren Bereich (7) angeordnet sind.

25. Verwendung nach einem der Ansprüche 1-11, **dadurch gekennzeichnet, dass** der Windenergiekonverter Widerstandsläufer nach dem Schalenanemometerprinzip aufweist und dass nur eine Hälfte einer Schale (8) des Schalenanemometers (9) Einbuchtungen (1) aufweist.
